# FASCICULE DE BREVET EUROPEEN

(11) **EP 0 627 297 B1**
(45) Date de publication et mention de la délivrance du brevet: **10.09.1997**
(21) Numéro de dépôt: 94401091.7
(22) Date de dépôt: 17.05.1994
(51) Int. Cl.: B29C 49/58

(54) **Procédé et agencement pour positionner angulairement un récipient ou une préforme de récipient sur un mandrin introduit dans le goulot de celui-ci, et mandrin et récipient agencés en vue de leur mise en oeuvre**
Verfahren und Anordnung zum winkligen Positionieren eines Behälters oder einer Vorform eines Behälters in Bezug auf den Dorn der in den Flaschenhals dieses Behälters eingeführt wird sowie Dorn-Behälteranordnung
Method and arrangement for angularly positioning a container or a preform of a container by introducing a mandrel in the bottle neck of said container and the mandrel-container arrangement for carrying it out

(30) Priorité: 19.05.1993 FR 9306056
(43) Date de publication de la demande: 07.12.1994
(73) Titulaire: SIDEL, F- 76053 Le Havre Cedex (FR)
(72) Inventeur: La Barre, Paul, F-76310 Sainte Adresse (FR)
(74) Mandataire: Gorree, Jean-Michel

(56) Documents cités:
- DE-B- 1 164 312
- FR-A- 1 520 693

## Description

La présente invention vise à proposer des moyens - procédé et agencement - permettant de positionner un récipient ou une préforme de récipient en matière thermoplastique, ayant un goulot à paroi intérieure cylindrique de révolution, dans une position angulaire prédéterminée sur un mandrin introduit à l'intérieur dudit goulot.

Un tel procédé et un tel agencement sont connus, par exemple, du document DE-B-1164312.

L'invention peut trouver une application particulièrement intéressante, bien que non exclusive, dans le positionnement angulaire relativement précis d'une préforme en matériau thermoplastique par rapport aux parois d'un moule pour le formage d'un récipient par exemple par une opération de soufflage ou d'étirage-soufflage ; il peut s'agir notamment de positionner angulairement des zones particulières (par exemple plus épaisses) de la préforme de façon correcte par rapport aux parois de la cavité du moule ou encore de positionner le départ du filetage du goulot d'une préforme. Cette position correcte peut du reste ne pas être une position unique sur 360°, mais peut être plus communément une position quelconque parmi n positions possibles sur 360° ; autrement dit, il s'agit d'amener la préforme à tourner d'une amplitude angulaire maximale de 360°/n sur elle-même lorsqu'elle est reçue par un mandrin de support (qui dans l'exemple considéré d'un traitement subséquent de soufflage ou d'étirage-soufflage peut être le nez d'une tuyère de soufflage) qui est, quant à lui, dans une position connue par rapport aux parois de la cavité du moule de par l'agencement même de l'installation.

Le but de l'invention est de proposer des moyens -procédé et agencement- qui soient technologiquement aussi simples que possible tout en étant efficaces et fiables, et qui dans toute la mesure du possible ne nécessitent que des aménagements minimes des installations actuellement connues, en pouvant de préférence également être prévus sur des installations déjà existantes avec un minimum de modifications de celles-ci.

A ces fins, selon un premier de ses acpects, l'invention propose un procédé pour positionner un récipient ou une préforme de récipient en matière thermoplastique, ayant un goulot à paroi intérieure cylindrique de révolution, dans une position angulaire prédéterminée sur un mandrin introduit à l'intérieur dudit goulot, lequel procédé se caractérise essentiellement en ce qu'on fait porter au moins une saillie radiale, prévue sur une surface choisie parmi la paroi interne du goulot ou la paroi externe du mandrin, contre au moins un épaulement d'appui prévu sur une surface choisie parmi la paroi externe du mandrin ou respectivement la paroi interne du goulot, ledit épaulement étant tourné vers l'extrémité libre du mandrin ou respectivement du goulot et s'étendant sur ladite paroi en étant incliné par rapport à l'axe du mandrin ou respectivement du goulot,
et en ce qu'on provoque un enfoncement du mandrin dans le goulot qui s'accompagne d'une rotation du goulot par rapport au mandrin générée par le glissement de ladite saillie radiale contre ledit épaulement, jusqu'à ce que des moyens de blocage arrêtent le mouvement relatif du mandrin et du récipient alors que le goulot est disposé avec une orientation angulaire prédéterminée par rapport au mandrin.

Avantageusement, au moins une saillie radiale est prévue sur la paroi interne du goulot et au moins un épaulement d'appui est prévu sur la paroi externe du mandrin, ledit épaulement étant tourné vers l'extrémité libre du mandrin et s'étendant sur ladite paroi externe en étant incliné par rapport à l'axe du mandrin.

De préférence, on provoque un enfoncement du mandrin dans le goulot qui s'accompagne d'une rotation du goulot par rapport au mandrin générée par le glissement de ladite saillie radiale contre ledit épaulement, jusqu'à ce que le bord libre du goulot vienne buter contre des moyens de blocage axial prévus sur la paroi externe du mandrin, ce grâce à quoi le récipient est disposé dans des positions axiale et angulaire prédéterminées par rapport au mandrin; dans une réalisation particulière trouvant son intérêt en particulier lorsque le mandrin est l'extrémité d'une tuyère de soufflage, les moyens de blocage axial prévus sur le mandrin sont en outre agencés pour coopérer de façon étanche avec le bord libre du goulot du récipient.

Selon un deuxième de ses aspects pour la mise en oeuvre du procédé ci-dessus, l'invention propose un agencement pour positionner un récipient ou une préforme de récipient en matière thermoplastique, ayant un goulot à paroi intérieure sensiblement cylindrique de révolution, dans une position angulaire prédéterminée sur un mandrin introduit à l'intérieur dudit goulot, lequel agencement se caractérise essentiellement en ce qu'une surface choisie parmi la paroi interne du goulot ou la paroi externe du mandrin comporte au moins une saillie approximativement radiale et en ce qu'une surface choisie parmi la paroi externe du mandrin ou respectivement la paroi interne du goulot comporte au moins un épaulement d'appui, tourné vers l'extrémité libre du mandrin ou respectivement du goulot, pour guider ladite saillie, cet épaulement s'étendant sur la paroi en étant incliné par rapport à l'axe du mandrin ou respectivement du goulot, des moyens de blocage étant en outre prévus pour arrêter le mouvement relatif du mandrin et du récipient lorsque le goulot est disposé avec une orientation angulaire prédéterminée par rapport au mandrin.

Avantageusement, la paroi interne du goulot comporte au moins une saillie approximativement radiale et la paroi externe du mandrin comporte au moins un épaulement d'appui, tourné vers l'extrémité libre du mandrin, pour guider ladite saillie radiale du goulot, cet épaulement s'étendant sur la paroi externe du mandrin en étant incliné par rapport à l'axe du mandrin.

De préférence, les moyens de blocage sont des moyens de blocage axial prévus sur la paroi externe du mandrin et aptes à recevoir en butée le bord libre du goulot lors de l'enfoncement du mandrin dans le goulot ; en particulier, les moyens de blocage axial du mandrin sont en outre agencés pour recevoir en butée axiale étanche le bord libre du goulot, solution qui trouve un intérêt particulier notamment lorsque le mandrin est constitué par l'extrémité d'une tuyère de soufflage.

En pratique, il est intéressant, en raison de la simplicité de réalisation, que la surface choisie parmi la paroi externe du mandrin ou la paroi interne du goulot comporte un nombre pair 2n de tronçons d'épaulement répartis circonférentiellement et ayant des inclinaisons alternativement inversées à la manière de V successifs permettant le positionnement angulaire du goulot par rapport au mandrin avec une prédétermination angulaire de 360°/n. En particulier, les moyens de blocage précités peuvent alors être constitués par l'intérieur de la pointe des V formés par deux tronçons successifs d'épaulement.

Dans une réalisation simple, la paroi munie des tronçons d'épaulement possède une partie antérieure de diamètre sensiblement inférieur à celui de sa partie postérieure, lesquelles parties antérieure et postérieure se raccordent l'une à l'autre en formant la susdite succession de tronçons d'épaulement.

Si l'on souhaite en outre établir une solidarisation mécanique fiable en rotation du goulot avec le mandrin, il est avantageux que lesdits moyens de solidarisation en rotation du goulot avec le mandrin comprennent au moins une encoche s'étendant longitudinalement située à l'extrémité postérieure de l'épaulement et conformée pour recevoir au moins une partie de la saillie, de préférence en faisant en sorte que l'encoche soit située à l'emplacement de la pointe d'un V formé par deux épaulements inclinés l'un vers l'autre et que le fond de l'encoche constitue les susdits moyens de blocage angulaire.

Pour faciliter la venue en contact de la saillie avec l'épaulement, puis son glissement le long de celui-ci, il est préférable que l'extrémité antérieure de la saillie radiale possède au moins un pan coupé, et de préférence deux pans coupés en forme de flèche.

Pour que l'agencement conforme à l'invention soit fiable dans toutes les positions relatives initiales du mandrin et du goulot, il est souhaitable que l'épaulement s'étende avec une inclinaison relativement faible, par exemple inférieure à 45°, par rapport à l'axe du mandrin ou du goulot.

Dans le cas où le nombre n des positions possibles prédéterminées est relativement important, l'amplitude angulaire maximale 2π/n de rotation du goulot par rapport au mandrin est faible et l'épaulement, qui conserve alors une pente très prononcée, peut avoir, sur toute sa longueur, une inclinaison sensiblement constante par rapport à l'axe du mandrin ou du goulot. Par contre, si l'amplitude angulaire précitée est trop grande, un épaulement d'inclinaison constante aurait une pente insuffisante pour provoquer la rotation du goulot eu égard aux frottements élevés qui interviennent dans le contact saillie/épaulement ; il est souhaitable alors que l'épaulement s'étende avec une inclinaison variable par rapport à l'axe du mandrin ou du goulot, cette inclinaison étant de valeur plus faible à proximité de l'extrémité antérieure du mandrin ou du goulot (c'est-à-dire la plus proche de l'extrémité libre du mandrin ou du goulot).

La fiabilité de l'agencement sera meilleure s'il est prévu plusieurs saillies dirigées approximativement radialement et sensiblement régulièrement réparties circonférentiellement, par exemple au nombre de deux diamétralement opposées ou de préférence de trois écartées d'environ 120°.

Dans le cas où la saillie est prévue sur la paroi interne du goulot et pour que la présence de la saillie ne gène pas le démoulage de la préforme à l'issue de sa fabrication par moulage et que cette saillie présente une résistance mécanique suffisante, il est avantageux que la saillie approximativement radiale soit constituée sous forme d'une nervure s'étendant longitudinalement sur la paroi interne du goulot ; par exemple cette nervure longitudinale peut s'étendre sur approximativement toute la hauteur du goulot, depuis le voisinage de l'orifice jusqu'au niveau approximatif d'une collerette annulaire ceinturant approximativement la base du goulot.

La présente invention définit également un récipient et une préforme de récipient, un mandrin, ainsi qu'une tuyère de soufflage dans une installation de fabrication de récipients, agencés en vue de la mise en oeuvre du procédé revendiqué.

L'invention sera mieux comprise à la lecture de la description détaillée qui suit de certains modes préférés de réalisation donnés uniquement à titre d'exemples nullement limitatifs.

Dans cette description, on se réfère aux dessins annexés sur lesquels :
- la figure 1 est une vue de côté, moitié extérieure et moitié en coupe, montrant un goulot de préforme ou de récipient agencé conformément à l'invention ;
- la figure 2 est une vue de dessus du goulot de la fig. 1 ;
- la figure 3 est une vue partielle en perspective de dessus du goulot des fig. 1 et 2 ;
- la figure 4 est une vue de dessus d'une variante préférée du goulot des fig. 1 à 3 ;
- la figure 5 est une vue en coupe diamétrale d'un mandrin apte à recevoir un goulot selon les figures 1 à 3 et agencé conformément à l'invention ;
- la figure 6 est une vue schématique développée de la paroi extérieure du mandrin de la fig. 5, et
- les figures 7 et 8 sont des vues schématiques développées de variantes d'agencement de la paroi extérieure du mandrin.

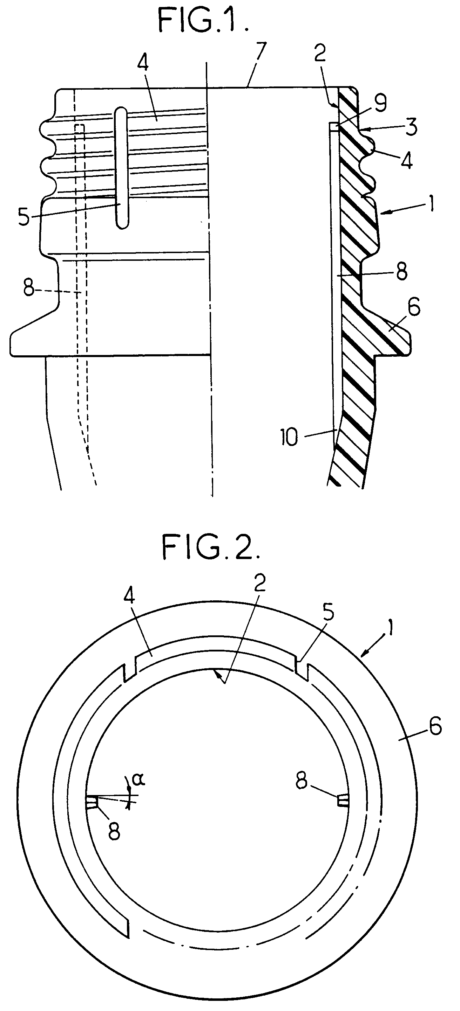

On rappellera tout d'abord qu'une préforme en matériau thermoplastique, destinée à la fabrication d'un récipient tel qu'une bouteille ou un flacon par une déformation mécanique tel qu'un processus de soufflage ou d'étirage-soufflage, est fabriquée par moulage et est munie, dès sa fabrication, du goulot à sa forme et à ses dimensions définitives. De ce fait, le goulot représenté à la figure 1 peut tout aussi bien être le goulot d'une préforme, car c'est dans ce cas surtout que l'invention semble devoir trouver un intérêt essentiel, que le goulot d'un récipient déjà formé ou bien encore d'un récipient intermédiaire obtenu au cours d'une étape intermédiaire de la fabrication d'un récipient définitif.

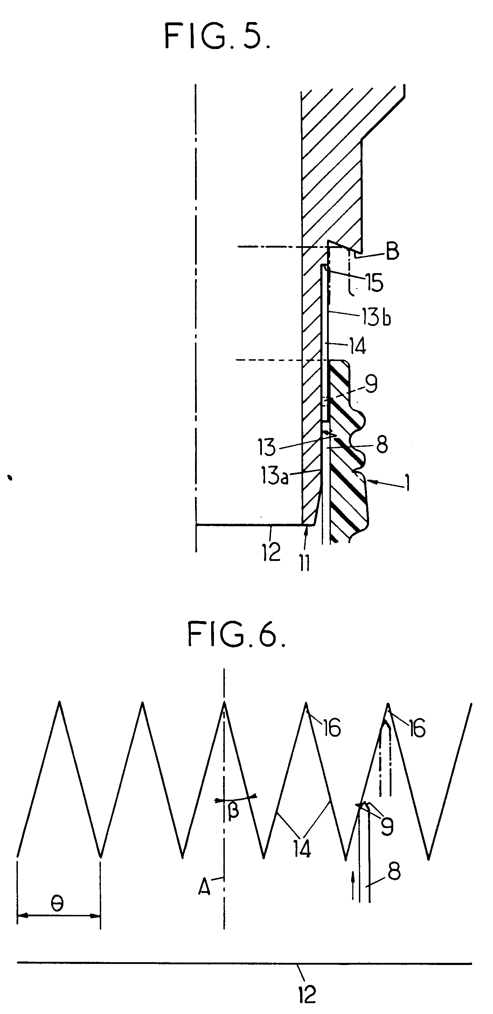

Dans un exemple typique d'application qui, bien que non exclusif, semble toutefois être une application préférée du procédé et de l'agencement conformes à l'invention qui seront présentés plus loin, le goulot est celui d'une préforme qui, en préliminaire au processus de fabrication d'un récipient, doit être emmanchée sur un mandrin destiné à la supporter à l'intérieur d'un moule de soufflage ou d'étirage-soufflage et, dans l'exemple représenté à la fig. 5, le mandrin est en pratique le nez d'une tuyère de soufflage.

Le but recherché selon l'invention est de donner à la préforme ou au récipient une position angulaire définie qui peut être unique (une position possible sur 360°) ou bien qui peut être une position parmi plusieurs possibles (n positions possibles espacées de 360°/n) de manière par exemple que, au cours de la fabrication, certaines parties du corps de la préforme puissent être positionnéees par rapport à des moyens fonctionnels (parois du moule dans l'exemple considéré), en tablant sur le fait que le mandrin a une orientation angulaire qui peut être connue en permanence de par la structure de l'installation.

En se reportant tout d'abord aux figures 1 à 4, le goulot 1 est conformé traditionnellement avec une paroi intérieure cylindrique de révolution 2 et une paroi extérieure 3 qui est munie, vers le haut, par exemple d'un filetage 4 pour le montage ultérieur d'un bouchon vissant (non montré) avec éventuellement des fentes de dégazage 5 et qui est munie, vers le bas, d'une collerette 6 de soutien de plus grand diamètre. Le bord de l'orifice du goulot est désigné par la référence 7.

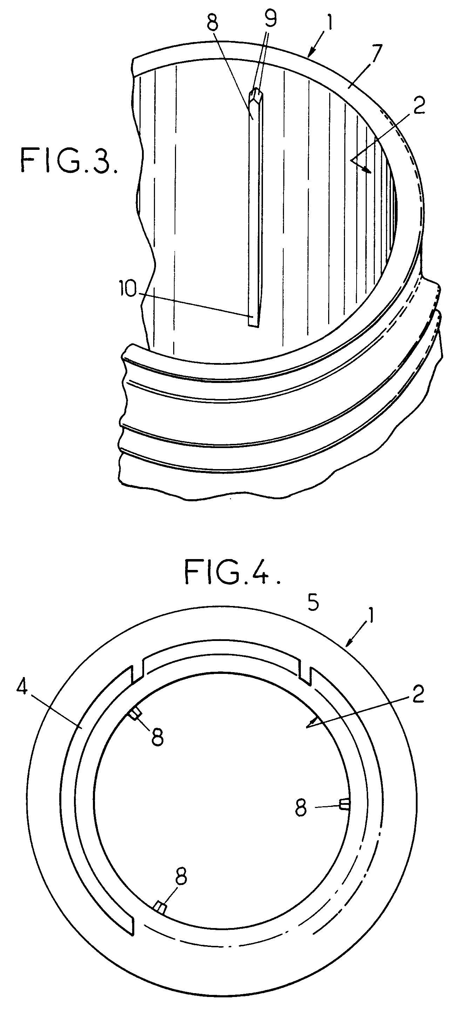

Conformément à l'invention, on prévoit, sur la paroi intérieure 2 du goulot, au moins une saillie 8, de préférence au moins deux (fig. 1 à 3) et avantageusement au moins trois saillies espacées d'environ 120° de manière que le mandrin soit correctement guidé à l'intérieur du goulot (fig. 4), dirigées sensiblement radialement et régulièrement espacées les unes des autres angulairement.

Chaque saillie 8 s'étend longitudinalement sur pratiquement toute la hauteur du goulot (à l'exception de la zone située immédiatement sous le bord 7) et constitue une nervure en forme de colonne engagée. Dans l'exemple représenté cette nervure est de section faiblement trapézoïdale ou quasi carrée à angle non vifs et la dimension de la saillie, dans l'exemple typique d'un goulot standardisé dit "28 mm ALCOA" est d'environ 0,8 mm et sa largeur est également d'environ 0,8 mm.

L'extrémité supérieure de la nervure est à pan coupé 9, de préférence à double pente en forme de flèche.

Dans l'exemple montré aux figures 1 et 3, le pied 10 de la nervure s'engage progressivement dans la paroi intérieure 2 qui, à cet endroit, n'est plus cylindrique de révolution, mais tronconique. On constitue ainsi un goulot muni d'une ou plusieurs nervures intérieures qui, en raison de leur faible section et de leur conformation, ne gênent pas le démoulage de la préforme lors de la fabrication de celle-ci.

A la figure 5, le bord de l'extrémité libre (ou extrémité antérieure) du mandrin est désigné par la référence 12. Le mandrin 11 possède une paroi externe 13 qui présente une partie antérieure 13a (en bas sur la fig. 5) ayant un diamètre sensiblement inférieur à celui de sa partie postérieure 13b (en haut sur la fig. 5), les parties 13a et 13b se raccordant par un épaulement 14 sensiblement radial apte à constituer une rampe de guidage pour une saillie 8 du goulot 1 engagé sur le mandrin 11.

Sur la figure 6, l'épaulement 14 présente au moins un tronçon s'étendant sous une inclinaison constante β par rapport à l'axe A du mandrin 11 ; l'inclinaison β doit être relativement faible, autrement dit la pente de l'épaulement doit être relativement élevée de façon que la saillie 8 engagée contre ledit épaulement glisse facilement le long de celui-ci. En pratique, un angle β au plus égal à 45° semble devoir s'imposer pour un fonctionnement fiable et une valeur d'environ 30° paraît bien appropriée.

Dans l'exemple représenté à la fig. 6, l'épaulement 14 est constitué d'une succession de tronçons identiques ayant des pentes alternativement inversées et constituant une succession de V. La partie interne des pointes 16 des V ainsi formés peuvent constituer des moyens de butée 15 qui bloquent le déplacement axial relatif du mandrin et du goulot et qui par conséquent constituent une butée angulaire conférant au goulot une position angulaire précise et prédéterminée par rapport au mandrin. Dans l'exemple typique représenté à la figure 6, l'étendue angulaire θ entre deux pointes en V successives est d'environ 36°, tandis que l'angle β est d'environ 30°.

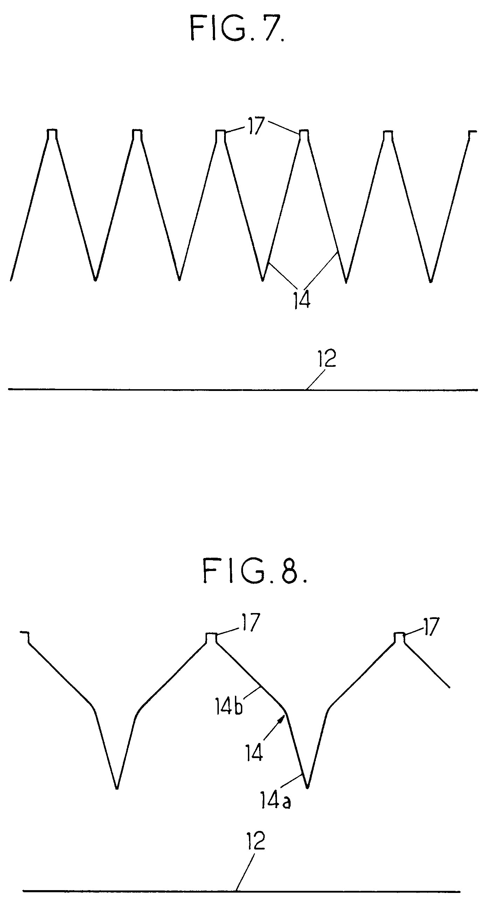

Si l'on souhaite en outre assurer une solidarisation fiable en rotation du goulot au mandrin, on peut prévoir, en lieu et place des pointes 16 en V, des encoches longitudinales 17 à bords sensiblement parallèles aptes à recevoir l'extrémité de la saillie 8 (fig. 7).

On notera également que, dans l'exemple de mise en oeuvre plus particulièrement envisagé et selon lequel le mandrin est constitué par l'extrémité d'une tuyère de soufflage, il est nécessaire d'assurer un montage étanche du goulot sur le mandrin. Cela est obtenu en munissant la paroi externe du mandrin d'une lèvre saillante annulaire B qui s'étend transversalement à la paroi, en formant un angle aigu avec celle-ci comme montré à la fig. 5. L'étanchéité est alors obtenue par un appui du bord du goulot contre la lèvre B (position en trait mixte sur la fig. 5). Pour que cette venue en butée soit rendue possible, il est nécessaire que la saillie 8 ne vienne pas alors à fond du V 16 et qu'il subsiste un léger jeu comme montré en trait mixte à la fig. 6. La lèvre B constitue une butée axiale qui détermine la position angulaire souhaitée du goulot par rapport au mandrin.

Si l'on souhaite une plage de rotation importante pour le positionnement du goulot, il est nécessaire de donner aux tronçons d'épaulement une pente plus faible. Or, une inclinaison au-delà de 45° paraît insuffisante pour provoquer la rotation du goulot sur le mandrin lors de l'engagement de celui-ci dans celui-là, et par ailleurs l'étendue longitudinale de l'épaulement ne peut pas être par trop allongée. Il semble alors intéressant de constituer des tronçons d'épaulement à double pente comme montré à la fig. 8 : chaque épaulement 14 présente ainsi une partie antérieure 14a à pente relativement raide (β < 45°) comme précédemment pour que le goulot puisse y amorcer son mouvement de rotation, suivie d'une partie postérieure 14b à pente relativement plus douce (β autour ou au-delà de 45°, mais de préférence n'excédant pas environ 60°).

Si le nombre des tronçons d'épaulement 14 est de 2n, le nombre des positions possibles du goulot sur le mandrin est de n, écartées angulairement de 360°/n.

Comme il va de soi et comme il résulte d'ailleurs déjà de ce qui précède, l'invention ne se limite nullement à ceux de ses modes d'applications et de réalisation qui ont été plus particulièrement envisagés ; elle en embrasse, au contraire, toutes les variantes dans le cadre défini par les revendications. En particulier, l'homme de l'art comprendra que les saillies 8 et épaulement ou tronçons d'épaulement 14 qui, dans l'exemple ci-dessus, sont prévus respectivement sur la paroi interne du goulot et sur la paroi externe du mandrin peuvent tout aussi bien être disposés dans un agencement inversé, à savoir respectivement sur la paroi externe du mandrin et sur la paroi interne du goulot, les effets techniques obtenus restant les mêmes.

## Revendications

1. Procédé pour positionner un récipient ou une préforme de récipient en matière thermoplastique, ayant un goulot (1) à paroi intérieure (2) cylindrique de révolution, dans une position angulaire prédéterminée sur un mandrin (11) introduit à l'intérieur dudit goulot (1),
caractérisé en ce qu'on fait porter au moins une saillie radiale (8), prévue sur une surface choisie parmi la paroi interne (2) du goulot (1) ou la paroi externe (13) du mandrin (11), contre au moins un épaulement d'appui (14) prévu sur une surface choisie parmi la paroi externe du mandrin ou respectivement la paroi interne du goulot, ledit épaulement (14) étant tourné vers l'extrémité libre du mandrin ou respectivement du goulot et s'étendant sur ladite paroi en étant incliné par rapport à l'axe du mandrin ou respectivement du goulot,
et en ce qu'on provoque un enfoncement du mandrin dans le goulot qui s'accompagne d'une rotation du goulot par rapport au mandrin générée par le glissement de ladite saillie radiale (8) contre ledit épaulement (14), jusqu'à ce que des moyens de blocage arrêtent le mouvement relatif du mandrin et du récipient alors que le goulot est disposé avec une orientation angulaire prédéterminée par rapport au mandrin.

2. Procédé selon la revendication 1, caractérisé en ce qu'au moins une saillie radiale (8) est prévue sur la paroi interne (2) du goulot (1) et au moins un épaulement d'appui (14) est prévu sur la paroi externe (13) du mandrin (11), ledit épaulement (14) étant tourné vers l'extrémité libre du mandrin et s'étendant sur ladite paroi externe (13) en étant incliné par rapport à l'axe (A) du mandrin.

3. Procédé selon la revendication 1 ou 2, caractérisé en ce qu'on provoque un enfoncement du mandrin (11) dans le goulot (1) qui s'accompagne d'une rotation du goulot par rapport au mandrin générée par le glissement de ladite saillie radiale (8) contre ledit épaulement (14), jusqu'à ce que le bord libre du goulot vienne buter contre des moyens de blocage axial prévus sur la paroi externe du mandrin, ce grâce à quoi le récipient est disposé dans des positions axiale et angulaire prédéterminées par rapport au mandrin.

4. Procédé selon la revendication 3, caractérisé en ce que les moyens de blocage axial prévus sur le mandrin sont en outre agencés pour coopérer de façon étanche avec le bord libre du goulot du récipient.

5. Agencement pour positionner un récipient ou une préforme de récipient en matière thermoplastique, ayant un goulot (1) à paroi intérieure (2) sensiblement cylindrique de révolution, dans une position angulaire prédéterminée sur un mandrin (11) introduit à l'intérieur dudit goulot (1), caractérisé en ce qu'une surface choisie parmi la paroi interne (2) du goulot (1) ou la paroi externe (13) du mandrin comporte au moins une saillie approximativement radiale (8) et en ce qu'une surface choisie parmi la paroi externe (13) du mandrin (11) ou respectivement la paroi interne (2) du goulot (1) comporte au moins un épaulement d'appui (14), tourné vers l'extrémité libre du mandrin ou respectivement du goulot, pour guider ladite saillie, cet épaulement (14) s'étendant sur la paroi en étant incliné par rapport à l'axe du mandrin ou respectivement du goulot, des moyens de blocage étant en outre prévus pour arrêter le mouvement relatif du mandrin et du récipient lorsque le goulot est disposé avec une orientation angulaire prédéterminée par rapport au mandrin.

6. Agencement selon la revendication 5, caractérisé en ce que la paroi interne (2) du goulot (1) comporte au moins une saillie approximativement radiale (8) et en ce que la paroi externe (13) du mandrin (11) comporte au moins un épaulement d'appui (14), tourné vers l'extrémité libre du mandrin, pour guider ladite saillie radiale du goulot, cet épaulement (14) s'étendant sur la paroi externe (13) du mandrin en étant incliné par rapport à l'axe (A) du mandrin.

7. Agencement selon la revendication 5 ou 6, caractérisé en ce que les moyens de blocage sont des moyens de blocage axial prévus sur la paroi externe du mandrin et aptes à recevoir en butée le bord libre du goulot lors de l'enfoncement du mandrin dans le goulot.

8. Agencement selon la revendication 7, caractérisé en ce que les moyens de blocage axial du mandrin sont en outre agencés pour recevoir en butée axiale étanche le bord libre du goulot.

9. Agencement selon l'une quelconque des revendications 5 à 8, caractérisé en ce que la surface choisie parmi la paroi externe (13) du mandrin ou la paroi interne (1) du goulot comporte un nombre pair 2n de tronçons d'épaulement (14) répartis circonférentiellement et ayant des inclinaisons alternativement inversées à la manière de V successifs permettant le positionnement angulaire du goulot par rapport au mandrin avec une prédétermination angulaire de 360°/n.

10. Agencement selon la revendication 5 ou 6, caractérisé en ce que les moyens de blocage précités sont constitués par l'intérieur de la pointe (16) des V formés par deux tronçons successifs d'épaulement.

11. Agencement selon la revendication 9 ou 10, caractérisé en ce que la paroi munie des tronçons d'épaulement possède une partie antérieure (13a) de diamètre sensiblement inférieur à celui de la partie postérieure (13b), lesquelles parties antérieure et postérieure se raccordent l'une à l'autre en formant la susdite succession de tronçons d'épaulement.

12. Agencement selon l'une quelconque des revendications 5 à 11, comportant en outre des moyens de solidarisation en rotation du goulot avec le mandrin, caractérisé en ce que lesdits moyens de solidarisation en rotation comprennent au moins une encoche (17) s'étendant longitudinalement située à l'extrémité postérieure de l'épaulement (14) et conformée pour recevoir au moins une partie de la saillie (8).

13. Agencement selon l'une quelconque des revendications 5 à 12, caractérisé en ce que l'extrémité antérieure de la saillie radiale (8) possède au moins un pan coupé (9), ou deux pans coupés (9) en forme de flèche.

14. Agencement selon l'une quelconque des revendications 5 à 13, caractérisé en ce que l'épaulement (14) s'étend avec une inclinaison (β) sensiblement constante par rapport à l'axe du mandrin ou du goulot.

15. Agencement selon l'une quelconque des revendications 5 à 14, caractérisé en ce que l'épaulement (14) s'étend avec une inclinaison (β) variable par rapport à l'axe du mandrin ou du goulot, cette inclinaison étant de valeur plus faible à proximité de l'extrémité antérieure du mandrin ou respectivement du goulot.

16. Agencement selon la revendication 14 ou 15, caractérisé en ce que l'inclinaison (β) de l'épaulement à proximité de l'extrémité antérieure du mandrin est au plus égale à 45°.

17. Agencement selon l'une quelconque des revendications 5 à 16, caractérisé en ce qu'il est prévu plusieurs saillies dirigées approximativement radialement (8) sensiblement régulièrement réparties circonférentiellement.

18. Agencement selon l'une quelconque des revendications 5 à 17, caractérisé en ce que la saillie approximativement radiale (8) est constituée sous forme d'une nervure s'étendant longitudinalement sur la paroi interne (2) du goulot (1).

19. Préforme en matériau thermoplastique prévue pour la fabrication de récipients tels que bouteilles ou flacons, possédant un goulot à paroi interne sensiblement cylindrique de révolution, caractérisée en ce que la paroi interne du goulot comporte au moins une saillie radiale ou au moins un épaulement incliné conformément à l'agencement de l'une quelconque des revendications 2 à 12.

20. Récipient tel que bouteille ou flacon, en matériau thermoplastique, muni d'un goulot à paroi interne sensiblement cylindrique de révolution, caractérisé en ce que la paroi interne du goulot comporte au moins une saillie radiale ou au moins un épaulement incliné conformément à l'agencement de l'une quelconque des revendications 5 à 18.

21. Mandrin pour supporter une préforme ou un récipient en matériau thermoplastique selon la revendication 19 ou 20, caractérisé en ce que sa paroi externe est pourvue d'au moins un épaulement ou d'au moins une saillie radiale conformément à l'agencement de l'une quelconque des revendications 5 à 18.

22. Tuyère de soufflage dans une installation de fabrication, par soufflage ou étirage-soufflage, de récipients tels que bouteilles ou flacons, à partir de préformes en matière thermoplastique agencées selon la revendication 19, caractérisée en ce que ladite tuyère ou l'extrémité de ladite tuyère, agencée pour supporter la préforme, est conformée sous forme d'un mandrin tubulaire selon la revendication 21.

## Claims

1. A method of positioning a container or a container preform of thermoplastic material, having a neck (1) provided with a circularly cylindrical inside wall (2), in a predetermined angular position on a mandrel (11) inserted inside said neck (1),
characterized in that at least one radial projection (8), provided on a surface selected from the inside wall (2) of the neck (1) or the outside wall (13) of the mandrel (11), is caused to bear against at least one thrust shoulder (14) provided on a surface selected respectively from the outside wall of the mandrel or the inside wall of the neck, said shoulder (14) facing respectively towards the free end of the mandrel or of the neck and extending over said wall while being inclined relative to the axis of the mandrel or of said neck, respectively,
and in that the mandrel is caused to penetrate into the neck, thereby causing a rotation of the neck relative to the mandrel generated by said radial projection (8) sliding against said shoulder (14), until locking means stop relative movement of the mandrel and of the container once the neck is disposed in a predetermined angular orientation relative to the mandrel.

2. A method according to claim 1, characterized in that at least one radial projection (8) is provided on the inside wall (2) of the neck (1) and at least one thrust shoulder (14) is provided on the outside wall (13) of the mandrel (11), said shoulder (14) facing towards the free end of the mandrel (11) and extending over said outside wall (13) while being inclined relative to the axis (A) of the mandrel.

3. A method according to claim 1 or 2, characterised in that the mandrel (11) is caused to penetrate into the neck (1), thereby causing a rotation of the neck relative to the mandrel generated by said radial projection (8) sliding against said shoulder (14), until the free end of the neck comes into abutment against axial locking means provided on the outside wall of the mandrel, whereby the container is disposed in predetermined annular and axial positions relative to the mandrel.

4. A method according to claim 3, characterized in that the axial locking means provided on the mandrel are further arranged to co*-*operate in sealed manner with the free edge of the neck of the container.

5. An arrangement for positioning a container or a container preform of thermoplastic material, having a neck (1) provided with a substantially circular cylindrical inside wall (2), in a predetermined angular position on a mandrel (11) inserted into said neck (1),
characterized in that a surface selected from the inside wall (2) of the neck (1) or the outside wall (13) of the mandrel comprises at least one approximately radial projection (8), and in that a surface respectively selected from the outside wall (13) of the mandrel (11) or the inside wall (2) of the neck (1) comprises at least one thrust shoulder (14) facing respectively towards the free end of the mandrel or of the neck for the purpose of guiding said projection, said shoulder (14) extending on the wall while being inclined relative to the axis of the mandrel or of the neck, respectively, locking means being further provided to stop relative movement of the mandrel and of the neck when said neck is disposed in a predetermined angular orientation relative to the mandrel.

6. An arrangement according to claim 5, characterized in that the inside wall (2) of the neck (1) includes at least one approximately radial projection (8) and in that the outside wall (13) of the mandrel (11) includes at least one thrust shoulder (14) facing towards the free end of the mandrel for the purpose of guiding said radial projection of the neck, said shoulder (14) extending on the outside wall (13) of the mandrel while being inclined relative to the axis (A) of the mandrel.

7. An arrangement according to claim 5 or 6, characterized in that the locking means are axial locking means provided on the outside wall of the mandrel and are suitable for receiving in abutment the free end of the neck when the mandrel is inserted in the neck.

8. An arrangement according to claim 7, characterized in that the axial locking means of the mandrel are further arranged to receive the free edge of the neck in sealed axial abutment.

9. An arrangement according to any one of claims 5 to 8, characterized in that the surface selected from the outside wall (13) of the mandrel or the inside wall (1) of the neck has an even number 2n of shoulder lengths (14) that are circumferentially distributed and that have alternately opposite inclinations to form successive Vs enabling the angular position of the neck relative to the mandrel to be predetermined to within an angle of 360°/n.

10. An arrangement according to claim 5 or 6, characterized in that the above-specified locking means are constituted by the insides of the tips (16) of the V-shapes formed by two successive lengths of the shoulder.

11. An arrangement according to claim 9 or 10, characterized in that the wall provided with the shoulder lengths has a front portion (13a) having a diameter that is substantially smaller than the diameter of its back portion (13b), which front and back portions are connected together, forming the above-specified succession of shoulder lengths.

12. An arrangement according to any one of claims 5 to 11, further including means for constraining the neck to rotate together with the mandrel,
characterized in that said rotation constraining means comprise at least one longitudinally extending notch (17) situated at the front end of the shoulder (14) and shaped to receive at least a portion of the projection (8).

13. An arrangement according to any one of claims 5 to 12,
characterized in that the front end of the radial projection (8) has at least one cant (9), or two cants (9) arranged in an arrow.

14. An arrangement according to any one of claims 5 to 13,
characterized in that the shoulder (14) extends with an inclination (β) that is substantially constant relative to the axis of the mandrel or of the neck.

15. An arrangement according to any one of claims 5 to 14,
characterized in that the shoulder (14) extends with an inclination (β) that varies relative to the axis of the mandrel or of the neck, said inclination being smaller in value in the vicinity of the front end of the mandrel or of the neck, respectively.

16. An arrangement according to claim 14 or 15,
characterized in that the inclination (β) of the shoulder in the vicinity of the front end of the mandrel is not more than 45°.

17. An arrangement according to any one of claims 5 to 16,
characterized in that a plurality of approximately-radially extending projections (8) are provided that are substantially regularly spaced apart circumferentially.

18. An arrangement according to any one of claims 5 to 17,
characterized in that the approximately-radial projection (8) is constituted in the form of a rib extending longitudinally on the inside wall (2) of the neck (1).

19. A preform of thermoplastic material provided for fabrication of containers such as bottles or flasks, and having a neck provided with a substantially circularly cylindrical inside wall,
characterized in that the inside wall of the neck includes at least one radial projection or at least one inclined shoulder according to the arrangement of any one of claims 5 to 18.

20. A container such as a bottle or a flask, made of thermoplastic material, and provided with a neck having an inside wall that is substantially in the form of a circular cylinder,
characterized in that the inside wall of the neck includes at least one radial projection or at least one inclined shoulder according to the arrangement of any one of claims 5 to 18.

21. A mandrel for supporting a preform or a container of thermoplastic material according to claim 19 or 20,
characterized in that its outside wall is provided with at least one shoulder or at least one radial projection according to the arrangement of any one of claims 5 to 18.

22. A blow nozzle in an installation for fabricating containers such as bottles or flasks by blow molding or by stretching-blow molding, from thermoplastic material preforms according to claim 19,
characterized in that said nozzle or the end of said nozzle, arranged to support the preform, is shaped in the form of a tubular mandrel according to claim 21.

## Patentansprüche

1. Verfahren zum Positionieren eines Behälters oder einer Vorform eines Behälters aus thermoplastischem Material, mit einem Hals (1) mit einer Innenwand (2) mit zylindrischem Umriß, in einer vorbestimmten Winkelposition auf einen in das Innere des Halses (1) eingeführten Dorn (11), dadurch gekennzeichnet, daß wenigstens ein radialer Vorsprung (8), der auf einer aus der Innenwand (2) des Halses (1) oder der Außenwand (13) des Dornes (11) ausgewählten Oberfläche vorgesehen ist, gegen wenigstens eine Anschlagschulter (14) gebracht wird, die auf einer aus der Außenwand des Dornes bzw. der Innenwand des Halses ausgewählten Oberfläche vorgesehen ist, wobei die Schulter (14) auf das freie Ende des Dornes bzw. des Halses gedreht wird und sich unter Neigung in bezug zur Achse des Dornes bzw. des Halses über die Wand ausdehnt,
und daß ein Eintreiben des Dornes in den Hals herbeigeführt wird, das von einer Drehung des Halses gegenüber dem Dorn begleitet wird, erzeugt durch das Gleiten des radialen Vorsprungs (8) an der Schulter (14), bis Blockierungsmittel die Relativbewegung des Dornes und des Behälters sperren, während der Hals mit einer vorbestimmten Winkelausrichtung in bezug zum Dorn angeordnet ist.

2. Verfahren nach Anspruch 1, dadurch gekennzeichnet, daß wenigstens ein radialer Vorsprung (8) auf der Innenwand (2) des Halses (1) vorgesehen ist und wenigstens eine Anschlagschulter (14) auf der Außenwand (13) des Dornes (11) vorgesehen ist, wobei die Schulter (14) gegen das freie Ende des Dornes gedreht wird und sich unter Neigung in bezug zur Achse (A) des Dornes über die Außenwand (13) ausdehnt.

3. Verfahren nach Anspruch 1 oder 2, dadurch gekennzeichnet, daß ein Eintreiben des Dornes (11) in den Hals (1) herbeigeführt wird, das von einer Drehung des Halses gegenüber dem Dorn begleitet wird, erzeugt durch das Gleiten des radialen Vorsprungs (8) an der Schulter (14), bis daß der freie Rand des Halses zum Anschlag an axiale Blockierungsmittel kommt, die auf der Außenwand des Dornes vorgesehen sind, wodurch der Behälter in vorbestimmten Axial- und Winkelpositionen in bezug zum Dorn angeordnet wird.

4. Verfahren nach Anspruch 3, dadurch gekennzeichnet, daß die auf dem Dorn vorgesehenen axialen Blockierungsmittel darüber hinaus so ausgebildet sind, daß sie in dichtender Weise mit dem freien Rand des Halses des Behälters zusammenwirken.

5. Anordnung zum Positionieren eines Behälters oder einer Vorform eines Behälters aus thermoplastischem Material, mit einem Hals (1) mit einer Innenwand (2) mit im wesentlichen zylindrischen Umriß, in einer vorbestimmten Winkelposition auf einen in das Innere des Halses (1) eingeführten Dorn (11), dadurch gekennzeichnet, daß eine von der Innenwand (2) des Halses (1) oder der Außenwand (13) des Dornes ausgewählte Oberfläche wenigstens einen in etwa radialen Vorsprung (8) umfaßt und daß eine von der Außenwand (13) des Dornes (11) bzw. der Innenwand (2) des Halses (1) ausgewählte Oberfläche wenigstens eine Anschlagschulter (14) umfaßt, die auf das freie Ende des Dornes bzw. des Halses gedreht ist, um den Vorsprung zu führen, wobei sich diese Schulter (14) unter Neigung gegenüber der Achse des Dornes bzw. des Halses über die Wand ausdehnt, wobei ferner Blockierungsmittel vorgesehen sind, um die Relativbewegung des Dornes und des Behälters zu sperren, während der Hals mit einer vorbestimmten Winkelausrichtung in bezug zum Dorn angeordnet ist.

6. Anordnung nach Anspruch 5, dadurch gekennzeichnet, daß die Innenwand (2) des Halses (1) wenigstens einen in etwa radialen Vorsprung (8) umfaßt und daß die Außenwand (13) des Dornes (11) wenigstens eine Anschlagschulter (14) umfaßt, die auf das freie Ende des Dornes gedreht ist, um den radialen Vorsprung des Halses zu führen, wobei sich diese Schulter (14) unter Neigung in bezug zur Achse (A) des Dornes über die Außenwand (13) ausdehnt.

7. Anordnung nach Anspruch 5 oder 6, dadurch gekennzeichnet, daß die Blockierungsmittel auf der Außenwand des Dornes vorgesehene axiale Blockierungsmittel sind und derart ausgebildet sind, daß sie während der Eintreibung des Dornes in den Hals den freien Rand des Halses anschlagen lassen.

8. Anordnung nach Anspruch 7, dadurch gekennzeichnet, daß die axialen Blockierungsmittel des Dornes ferner derart ausgebildet sind, daß sie den freien Rand des Halses dichtend axial anschlagen lassen.

9. Anordnung nach einem der Ansprüche 5 bis 8, dadurch gekennzeichnet, daß die aus der Außenwand (13) des Dornes oder der Innenwand (1) des Halses ausgewählte Oberfläche eine gerade Anzahl 2n von Schulterabschnitten (14) umfaßt, die über den Umfang verteilt sind, und abwechselnd umgekehrte Schrägstellungen in der Art aufeinanderfolgender V's aufweist, was die Winkelpositionierung des Halses in bezug zum Dorn mit einem vorbestimmten Winkel von 360°/n zuläßt.

10. Anordnung nach Anspruch 5 oder 6, dadurch gekennzeichnet, daß die vorgenannten Blockierungsmittel durch das Innere des Punktes (16) des durch zwei aufeinanderfolgende Abschnitte der Schulter gebildeten V gebildet sind.

11. Anordnung nach Anspruch 9 oder 10, dadurch gekennzeichnet, daß die mit den Schulterabschnitten versehene Wand einen vorauslaufenden Teil (13a) von wesentlich geringerem Durchmesser als dem des nachlaufenden Teils (13b) besitzt, wobei sich die vorauslaufenden und nachlaufenden Teile unter Bildung der oben genannten Folge von Schulterabschnitten aneinander anschließen.

12. Anordnung nach einem der Ansprüche 5 bis 11, mit ferner Mitteln zur Drehbefestigung des Halses mit dem Dorn, dadurch gekennzeichnet, daß die Drehbefestigungsmittel wenigstens eine sich längs erstreckende Kerbe (17) umfassen, die am nachlaufenden Ende der Schulter (14) liegt und ausgebildet ist, um wenigstens einen Teil des Vorsprungs (8) aufzunehmen.

13. Anordnung nach einem der Ansprüche 5 bis 12, dadurch gekennzeichnet, daß das vorauslaufende Ende des radialen Vorsprungs (8) wenigstens eine schräge Kante (9), oder zwei schräge Kanten (9) in Form eines Pfeiles, umfaßt.

14. Anordnung nach einem der Ansprüche 5 bis 13, dadurch gekennzeichnet, daß sich die Schulter (14) mit einer im wesentlichen konstanten Neigung (β) in bezug zur Achse des Dornes oder des Halses erstreckt.

15. Anordnung nach einem der Ansprüche 5 bis 14, dadurch gekennzeichnet, daß sich die Schulter (14) mit einer veränderlichen Neigung (β) in bezug zur Achse des Dornes oder des Halses erstreckt, wobei diese Neigung in der Nähe des vorauslaufenden Endes des Dornes bzw. des Halses einen sehr geringen Wert hat.

16. Anordnung nach Anspruch 14 oder 15, dadurch gekennzeichnet, daß die Neigung (β) der Schulter in der Nähe des vorauslaufenden Endes des Dornes höchstens gleich 45° beträgt.

17. Anordnung nach einem der Ansprüche 5 bis 16, dadurch gekennzeichnet, daß mehrere Vorsprünge vorgesehen sind, die in etwa radial (8), im wesentlichen regelmäßig über den Umfang verteilt ausgerichtet sind.

18. Anordnung nach einem der Ansprüche 5 bis 17, dadurch gekennzeichnet, daß der in etwa radiale Vorsprung (8) in Form einer sich längs über die Innenwand (2) des Halses (1) erstreckenden Rippe ausgebildet ist.

19. Vorformling aus thermoplastischem Material zur Herstellung von Behältern, wie Flaschen oder Flakons, der einen Hals mit einer Innenwand mit im wesentlichen zylindrischem Umriß besitzt, dadurch gekennzeichnet, daß die Innenwand des Halses in Übereinstimmung mit der Anordnung eines der Ansprüche 2 bis 12 wenigstens einen radialen Vorsprung oder wenigstens eine geneigte Schulter umfaßt.

20. Behälter, wie eine Flasche oder ein Flakon, aus thermoplastischem Material, der mit einem Hals mit einer Innenwand mit in wesentlichen zylindrischem Umriß versehen ist, dadurch gekennzeichnet, daß die Innenwand des Halses in Übereinstimmung mit der Anordnung eines der Ansprüche 5 bis 18 wenigstens einen radialen Vorsprung oder wenigstens eine geneigte Schulter umfaßt.

21. Dorn zum Tragen eines Vorformlings oder eines Behälters aus thermoplastischem Material gemäß Anspruch 19 oder 20, dadurch gekennzeichnet, daß seine Außenwand mit wenigstens einer Schulter oder mit wenigstens einem radialen Vorsprung in Übereinstimmung mit der Anordnung eines der Ansprüche 5 bis 18 versehen ist.

22. Blasformungsdüse in einer Fabrikationsanlage zur Blasformung oder Streck-Blasformung von Behältern, wie Flaschen oder Flakons, ausgehend aus Vorformlingen aus thermoplastischem Material, die gemäß Anspruch 19 ausgebildet sind, dadurch gekennzeichnet, daß die Düse oder das zum Tragen des Vorformlings ausgebildete Ende der Düse in Form eines röhrenförmigen Dornes gemäß Anspruch 21 ausgebildet ist.
